# EUROPÄISCHE PATENTSCHRIFT

(11) **EP 2 236 798 B1**
(45) Veröffentlichungstag und Bekanntmachung des Hinweises auf die Patenterteilung: **01.02.2012**
(21) Anmeldenummer: 10156624.8
(22) Anmeldetag: 16.03.2010
(51) Int. Cl.: F02D 41/22, F02D 41/00

(54) **Verfahren und Vorrichtung zur Diagnose eines variablen Ventiltriebs einer Brennkraftmaschine**
Method and device for diagnosing a variable valve drive of a combustion engine
Procédé et dispositif de diagnostic d'une commande de soupape variable d'un moteur à combustion interne

(30) Priorität: 24.03.2009 DE 102009001817
(43) Veröffentlichungstag der Anmeldung: 06.10.2010
(73) Patentinhaber: Robert Bosch GmbH, 70442 Stuttgart (DE)
(72) Erfinder: Mallebrein, Georg, 70825 Korntal-Muenchingen (DE); Sarac, Ipek, 70191 Stuttgart (DE)

(56) Entgegenhaltungen:
- EP-A1- 0 359 363
- EP-A2- 0 399 829
- EP-A2- 1 375 883
- DE-A1- 3 624 441
- DE-A1- 19 545 645
- DE-A1-102007 013 252
- GB-A- 2 344 656

## Beschreibung

### Stand der Technik

Die Erfindung betrifft ein Verfahren zur Diagnose eines variablen Ventiltriebs einer Brennkraftmaschine, insbesondere eines nockenwellenfreien variablen oder vollvariablen Ventiltriebs, ein entsprechendes Verfahren zur Diagnose einer Ventilsteuerung für einen solchen Ventiltrieb sowie eine entsprechende Vorrichtung, gemäß den Oberbegriffen der jeweiligen unabhängigen Ansprüche.

Es ist bekannt, dass fremdgezündete oder selbstzündende Brennkraftmaschinen Einlass- und Auslassventile aufweisen, mittels derer entweder Frischluft (wie beim Dieselmotor) oder ein Kraftstoff-Luft-Gemisch (wie beim Ottomotor) den jeweiligen Brennkammern zugeführt wird bzw. die Verbrennungsgase aus den Brennräumen abgeführt werden. Im Idealfall wird der Zylinder optimal mit Luft bzw. Kraftstoff-Luft-Gemisch versorgt und die Verbrennungsprodukte möglichst vollständig entzogen. In der eigentlichen Verbrennungsphase sollen die Ventile den Zylinderraum möglichst gut gegenüber dem Ansaugkanal abdichten.

Die zeitgenaue Steuerung dieser Ventile bedarf einer präzisen Steuerungstechnik, welche in herkömmlichen Brennkraftmaschinen mittels einer Nockenwelle erfolgt, die meist im Zylinderblock angeordnet ist. Auf dieser Welle angeordnete Nocken sorgen dabei in an sich bekannter Weise für das Öffnen und Schließen der Ventile.

Darüber hinaus sind auch nockenwellenfreie Ventiltriebe bekannt, welche nach einem elektrohydraulischen Differenzialkolbenprinzip oder einem elektromagnetischen Stellprinzip arbeiten. Diese ermöglichen innerhalb eines großen Bereichs weitgehend unabhängig voneinander einstellbare Öffnungs- und Schließwinkel der Einlass- und Auslassventile. Auch bei diesen nockenwellenfreien Ventiltrieben kommt es auf eine möglichst zeitgenaue Ansteuerung an.

Es sind ferner "passive" bzw. indirekte Verfahren zur Diagnose solcher Ventiltriebe bekannt, bei denen bspw. das Signal eines am Eingang eines Saugrohrs der Brennkraftmaschine angeordneten Luftmassenmessers oder eines im Saugrohr angeordneten Saugrohrdrucksensors verwendet wird.

Aus der EP 1 375 883 A2 ist ein Verfahren zum Betreiben einer Brennkraftmaschine, ein Prüfungsverfahren zur Überprüfung der Funktion eines Verfahrens zum Betreiben einer Brennkraftmaschine, ein Steuerelement für eine Brennkraftmaschine sowie eine Brennkraftmaschine bekannt, wobei bei dem Verfahren zum Betreiben einer Brennkraftmaschine einem Brennraum Luft zugeführt wird. Diese Luft strömt dabei zunächst durch ein Ansaugrohr in dem eine Drosselklappe angeordnet ist. Bevor die Luft in den Brennraum gelangt, strömt sie auch über wenigstens ein Einlassventil mit variabler Ventilhubverstellung. Sowohl für die Einstellung des Drosselklappenwinkels als auch die Einstellung des Ventilhubs ist jeweils eine Stelleinrichtung vorgesehen. Die beiden Stelleinrichtungen sind unabhängig voneinander. Im Normalbetrieb werden sie derart angesteuert, dass sowohl ein vorgegebener Saugrohrdruck als auch eine vorgegebene Füllung des Brennraums erzeugt wird. Bei Ausfall einer der Stelleinrichtungen wird dann lediglich ein Sollwert für die Zylinderfüllung vorgegeben und mittels der noch funktionierenden Stelleinrichtung erzeugt.

In der DE 36 24 441 A1 wird vorgeschlagen, dass bei einem Diatnoseverfahren und einer Einrichtung zur quantitativen Überprüfung von Stellgliedern bei der Regelung und/oder Steuerung von Betriebsparametern von Brennkraftmaschinenen, nämglich des Leerlaufstellers und der Tankentlüftung sowie der zugeordneten Hardware-Ketten, jeweils Mehr- oder Minderluftmengen über eine entsprechende Ansteuerung des Tankentlüftungsventils bzw. des Leerlaufstellers, vorzugsweise gleichzeitig und gegenläufig zuzuführen und die sich hierdurch ergebenden, jeweils möglichen Drehzahländerungen (Drehzahl bleibt konstand; Drehzahl erniedrigt sich; Drehzahl erhöht sich) festzustellen und entsprechend auszuwerten.

### Offenbarung der Erfindung

Der vorliegenden Erfindung liegt der Gedanke zugrunde, zur Diagnose eines hier betroffenen variablen Ventiltriebs einer Brennkraftmaschine an einem durch den Ventiltrieb getriebenen Ventil wenigstens eine mechanische Betriebsgröße eines durch den Ventiltrieb getriebenen Ventils, wie bspw. den Öffnungs- oder Schließwinkel oder den Hub des Ventils oder eine andere Betriebsgröße wie den Saugrohrdruck so zu verändern, dass die Brennkraftmaschine an zwei Betriebspunkten mit unterschiedlicher Ventil- und/ oder Drosselklappen-Sollbetätigung, jedoch mit gleicher Soll-Füllung des jeweiligen Brennraums der Brennkraftmaschine, betrieben werden kann. Die Diagnose des Ventiltriebs erfolgt anhand der sich ergebenden Ist-Werte der Füllung des Brennraums an den beiden genannten Betriebspunkten oder durch Auswertung des Verlaufs des Saugrohrdrucks der Brennkraftmaschine, wenn auf eine konstante Füllung geregelt wird.

Hierbei wird in einer Ausführungsform eine erste Ventil-Sollbetätigung eingestellt, bei der die Füllung des Brenn-raums relativ gering empfindlich auf Änderungen der Ventilsteuerzeiten und/oder Ventil-Hubfehlern reagiert, und eine zweite Ventil-Sollbetätigung eingestellt, bei der die Füllung des Brennraums relativ hoch empfindlich auf Änderungen der Ventilsteuerzeiten und/oder Ventil-Hubfehlern reagiert, wobei der Druck in einem dem Brennraum vorgelagerten Saugrohr der Brennkraftmaschine so verändert wird, dass sich die Füllung des Brennraums bei den beiden Ventil-Sollbetätigungen im We-sentlichen nicht ändert, und wobei gemessene Ist-Werte der Füllung des Brennraums mit vorher abgelegten Erwartungswerten verglichen werden und bei einer Abweichung dieser Werte auf einen Defekt des Ventiltriebs geschlossen wird.

In einer zweiten Ausführungsform werden bei einer mittleren Last der Brennkraftmaschine ein Einlassventil bei vollem Hub und einem Schließwinkel nahe dem unteren Totpunkt der Brennkraftmaschine betrieben und anschließend bei weit geöffneter Drosselklappe das Einlassventil vor oder nach dem unteren Totpunkt geschlossen, so dass sich im Wesentlichen eine übereinstimmende Frischluftfüllung der Brennkammer ergibt, wobei auf einen Defekt des Ventiltriebs geschlossen wird, wenn der sich ergebende Saugrohrdruck vom erwarteten Saugrohrdruck abweicht.

Das erfindungsgemäße Verfahren und die Vorrichtung stellen ein "aktives" bzw. direktes Diagnoseverfahren bereit, bei dem die Ventilsteuerzeiten und/oder Ventilhübe zur Diagnose gezielt modifiziert werden, was sehr präzise Diagnoseergebnisse ermöglicht.

Das erfindungsgemäße Verfahren kommt vorteilhaft ohne zusätzliche Sensoren, wie bspw. Ventilhubsensoren, aus.

### Zeichnung

Die vorliegende Erfindung wird nachfolgend an Hand bevorzugter Ausführungsbeispiele und unter Bezugnahme auf die Zeichnung noch eingehender erläutert, aus denen weitere Besonderheiten, Merkmale und Vorteile hervorgehen.

### Im Einzelnen zeigen

Fig. 1 den typischen Aufbau eines nockenwellengetriebenen Ventils, bei dem das erfindungsgemäße Verfahren angewendet werden kann;
Fig. 2 den typischen Aufbau eines nockenwellenfreien elektrohydraulischen Ventiltriebs, bei dem das erfindungsgemäße Verfahren zum Einsatz kommen kann;
Fig. 3 ein Beispiel eines im Stand der Technik bekannten Ventildiagramms zur Erläuterung des Zusammenhangs von Ventileinlass, Ventilauslass, oberem Totpunkt (OT) und unterem Totpunkt (UT);
Fig. 4 typische Verläufe der Ventilhubhöhe bei einem vollvariablen Ventiltrieb;
Fig. 5 eine grafische Veranschaulichung der bei dem erfindungsgemäßen Verfahren verwendeten Ladungswechselgleichung, vorliegend für den Fall ohne Ventilüberschneidung;
Fig. 6 ein Blockschaltbild eines bevorzugten Ausführungsbeispiels der erfindungsgemäßen Vorrichtung zur Ventildiagnose; und
Fig. 7 ein bevorzugtes Ausführungsbeispiel des erfindungsgemäßen Verfahrens anhand eines Ablaufdiagramms.

### Beschreibung von Ausführungsbeispielen

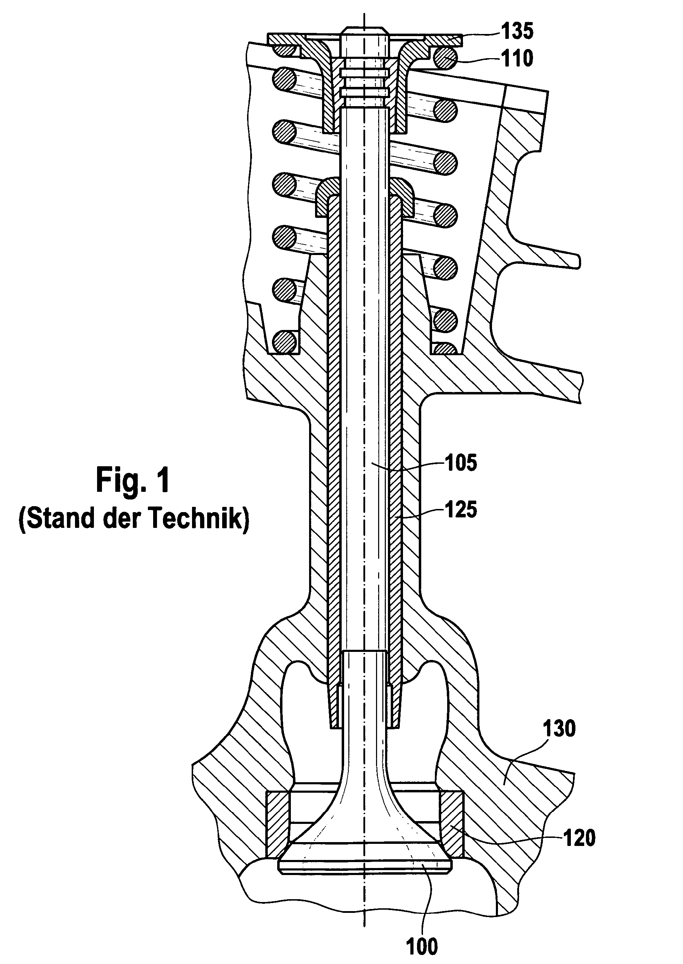

Eine fremdgezündete Brennkraftmaschine besitzt üblicher Weise mindestens ein Ein- und ein Auslassventil pro Zylinder. Es gibt aber auch Brennkraftmaschinen mit drei oder vier Ventilen. Ein solches Ventil besteht meist aus einem kegelförmigen Ventilteller 100 und einem Ventilschaft 105 (Fig. 1). Der Ventilteller 100 wird durch eine vorgespannte Ventilfeder 110 und mittels im Bereich der Einlass- oder Auslassöffnung angeordneten Keilen 120 an seinem Platz gehalten. Der Ventilschaft 105 wird meist durch eine in das Gehäuse 130 der Brennkraftmaschine eingepresste Hülse 125 geführt. Am Ende des Ventilschafts 105 ist ein vorliegend flaches Endstück 135 angeordnet, mittels dessen das Ventil betätigt wird, beispielsweise, mittels der eingangs beschriebenen Nocken einer hier nicht gezeigten Nockenwelle. In der Brennkraftmaschine hat man die Wahl, die Ventile in einer Kopf- oder Seitenkonstruktion anzubringen.

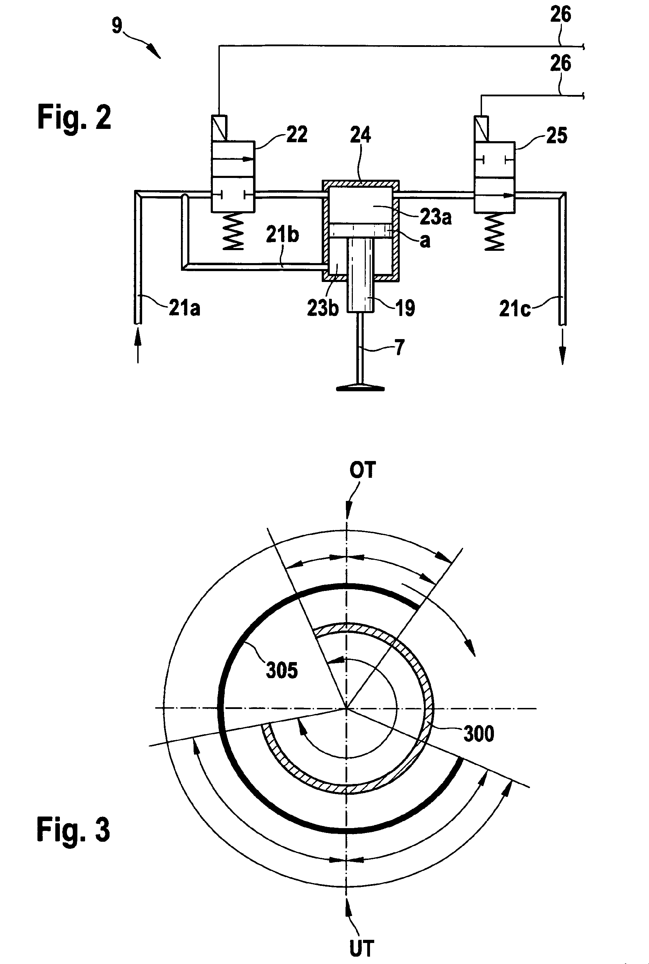

Bei früheren Brennkraftmaschinen wurden ausschließlich mechanische Ventilsteuerungen mit einer Nockenwelle gebaut. Dabei wurde das Einlassventil im Bereich um den oberen Totpunkt (OT) geöffnet und im Bereich des unteren Totpunkts (UT) wieder geschlossen. Der hier beschriebene Antrieb der Nockenwelle erfolgt entweder durch Zahnräder und eine Kette oder durch einen Zahnriemen. Da sich die Ventile während der vier Takte eines fremdgezündeten 4-Takt-Motors nur jeweils einmal öffnen müssen, die Kurbelwelle sich aber während dieser Zeit zweimal dreht, muss das Zahnrad an der Nockenwelle genau doppelt so viele Zähne haben wie das an der Kurbelwelle. Die genaue Einstellung der Ventile erfolgt durch ein Ventildiagramm (Fig. 3), mittels dessen die Zahnräder der Nockenwelle und der Kurbelwelle so aufeinander abgestimmt werden, dass die Nocken genau zum richtigen Zeitpunkt die Ventile öffnen.

Die Fig. 2 zeigt schematisch den typischen Aufbau eines modernen nockenwellenfreien elektrohydraulischen Ventiltriebs 9 zum Betrieb eines Ventils mit einem Ventilgehäuse 24, dessen Ventilhub frei wählbar ist. Das Ventil umfasst einen Ventilschaft 7, an dessen (vorliegend) unterem Ende ein bereits beschriebener Ventilteller angeordnet ist. Der Ventilschaft 7 wird mittels eines Ventilkolben 19 bewegt, der sich vorliegend in einer Mittelstellung 'a' in dem Ventilgehäuse 24 befindet, wodurch ein oberer Ventilraum 23a und ein unterer Ventilraum 23b gebildet werden.

Der Ventiltrieb 9 umfasst ferner ein erstes Steuerventil 22 und ein zweites Steuerventil 25, welche beide federvorgespannt sind. Die beiden Steuerventile 22, 25 werden in an sich bekannter Weise mittels über elektrische Steuerleitungen 26 übertragener Steuersignale elektrisch angesteuert und über hydraulische Leitungen 21 a, 21 b und 21 c mit einem hydraulischen Fluid versorgt.

Der zuvor beschriebene Antrieb der Nockenwelle erfolgt entweder durch Zahnräder und eine Kette oder durch einen Zahnriemen. Die genaue Einstellung der Ventile erfolgt durch ein Ventildiagramm (Fig. 3), mittels dessen die Zahnräder der Nockenwelle und der Kurbelwelle so aufeinander abgestimmt werden, dass die Nocken genau zum richtigen Zeitpunkt die Ventile öffnen. Dieses Einstellen der Zahnräder erfolgt mittels Markierungen, die auf ihnen angebracht sind, oder, wie schon erwähnt, durch das in der Fig. 3 gezeigte Ventildiagramm.

Um den Zeitpunkt der Ventilöffnung und -schließung und die Zeit, in der beide Ventile offen sind, grafisch darzustellen, ist das Ventildiagramm aus einem Kreis gebildet (Fig. 3) , an dem bei 0 bzw. 360° KW der sogenannte "obere Totpunkt" (OT) und bei 180° KW der sogenannte "untere Totpunkt" (UT) angeordnet sind. Der gestrichelte Teilkreis 300 repräsentiert dabei die Einlassphase und der schwarze Teilkreis 305 die Auslassphase. In das Diagramm trägt man bspw. ein, wieviel Grad vor dem OT sich das Einlassventil öffnet und zieht einen Bogen, bis zum Zeitpunkt der Schließung. Das gleiche Verfahren wird für das Auslassventil angewendet.

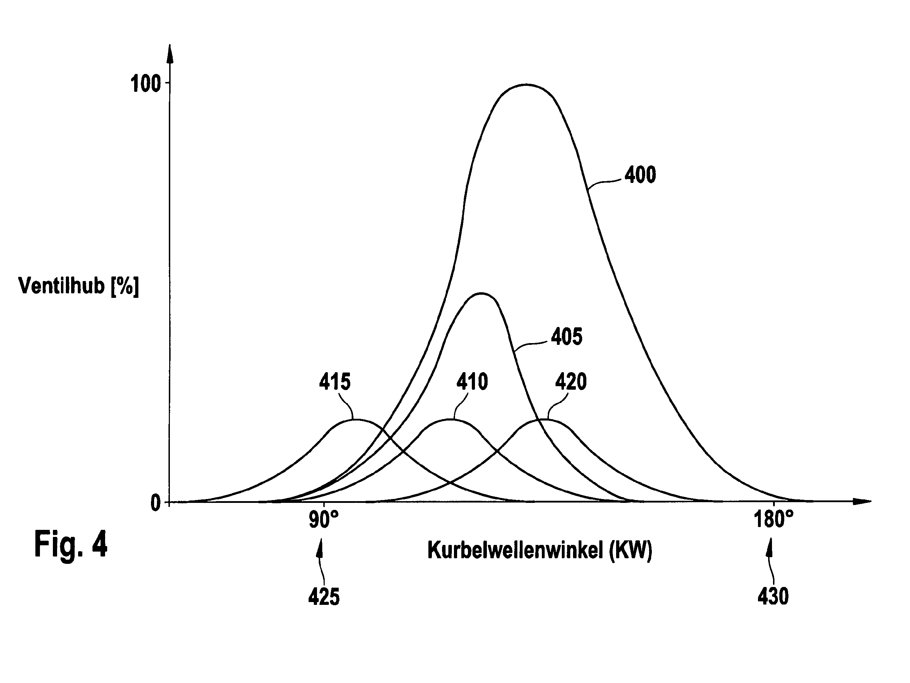

Die Fig. 4 zeigt typische Verläufe der Einlassventil-Hubhöhe bei einem vollvariablen Ventiltriebs. In das Diagramm eingetragen sind qualitative Verläufe einer Hubkurve 400 mit dem Maximalhub, einer mittleren Hubkurve 405 sowie einer Hubkurve 410 mit dem Minimalhub. Zur besseren Orientierung sind in dem Diagramm auch der OT 425 und der UT 430 eingezeichnet (siehe Fig. 2). Zusätzlich sind zwei Hubkurven mit Minimalhub eingezeichnet, und zwar eine Hubkurve 415 mit einer gegenüber dem OT 425 zu früh erfolgten Ventilansteuerung sowie eine solche mit gegenüber dem OT zu spät erfolgter Ansteuerung 420.

Zur technischen Realisierung eines vollvariablen Ventiltriebs ist die an sich bekannte elektrohydraulische Ventilsteuerung (EHVS) eine der flexibelsten Möglichkeiten, die klassische mechanische Nockenwelle durch elektronisch ansteuerbare Aktuatorik zu ersetzen und eine vollvariable Zu- und Abführung der an der Verbrennung beteiligten Gase zu ermöglichen und ganz neue Möglichkeiten zu erschließen, den genannten Ladungswechsel zu gestalten und einen vollvariablen, nockenwellenfreien Ventiltrieb auf Basis eines elektrohydraulischen Differenzialkolbenprinzips ohne zusätzliche Ventilfeder zu entwickeln. Zudem sind bei der EHVS, neben den Öffnungs- und Schließwinkeln, auch die Ventilhübe frei verstellbar.

Wie erwähnt, wird über die Ein- und Auslassventile gesteuert, wann Luft bzw. Kraftstoff-Luft-Gemisch in den Zylinder gelangen und wann das Abgas ausgestoßen werden kann. Mit den genannten variablen Ventilöffnungszeiten lässt sich die Füllung der Zylinder der Brennkraftmaschine mit Luft bzw. Luft-Kraftstoff-Gemisch für die aktuellen Betriebsbedingungen optimieren. Variable Ventiltriebe, d. h. solche mit variabler Öffnungszeit, variablem Ventilhub und/oder variabler Spreizung, reduzieren durch die Beeinflussung der Ladungswechselarbeit (d.h. die physikalische Arbeit, die der Motor leisten muss, um die Frischluft anzusaugen und das verbrannte Gas auszuschieben), der Gemischaufbereitung und der Verbrennung den Kraftstoffverbrauch von bspw. Ottomotoren. Durch die Variation der Spreizung auf der Ein- und/oder Auslassseite kann durch eine interne Abgasrückführung der Restgasanteil im Teillastbereich gesteuert werden und durch Entdrosselung und verbesserter Gemischaufbereitung der Wirkungsgrad verbessert werden.

Ein weiteres Anwendungsbeispiel der variablen Ventilsteuerung ist das sogenannte "Scavenging" auf der Grundlage einer Benzin-Direkteinspritzung mit Aufladung. Mittels einer geeigneten Motorsteuerung wird dabei der Einspritzzeitpunkt, d.h. das Timing der Ein- und Auslassventile und das Wastegate oder die variable Turbinengeometrie eines Turboladers gesteuert. Dabei werden die Ventile im niedrigen Drehzahlbereich so angesteuert, dass das Einlassventil und das Auslassventil einen Moment gleichzeitig geöffnet sind. Aufgrund des dadurch entstehenden Druckgefälles zum Abgastrakt hin wird der Brennraum mit Frischluft gefüllt und gleichzeitig das von der letzten Verbrennung im Brennraum verbliebene Restgas ausgespült. Dies führt zu einer besseren Kühlung und einer größeren Füllung des Zylinders mit Frischluft. Die höhere Zylinderfüllung steigert das spontane Drehmoment und erhöht über den stärkeren Abgasstrom den Ladedruck des Turboladers. Bei diesem Anwendungsbeispiel ist eine präzise Ventilsteuerung erforderlich.

Wie ebenfalls bereits beschrieben, hat ein Ventiltrieb die Aufgabe, das Pumpverhalten der Brennkraftmaschine zu beeinflussen. Schließt man bspw. das Einlassventil deutlich früher als im UT, so wird weniger Füllung abgesaugt. Stellt man eine Ventilüberschneidung fest, so wird bei Saugrohrunterdruck während der Überschneidung Restgas in das Saugrohr zurückgesaugt.

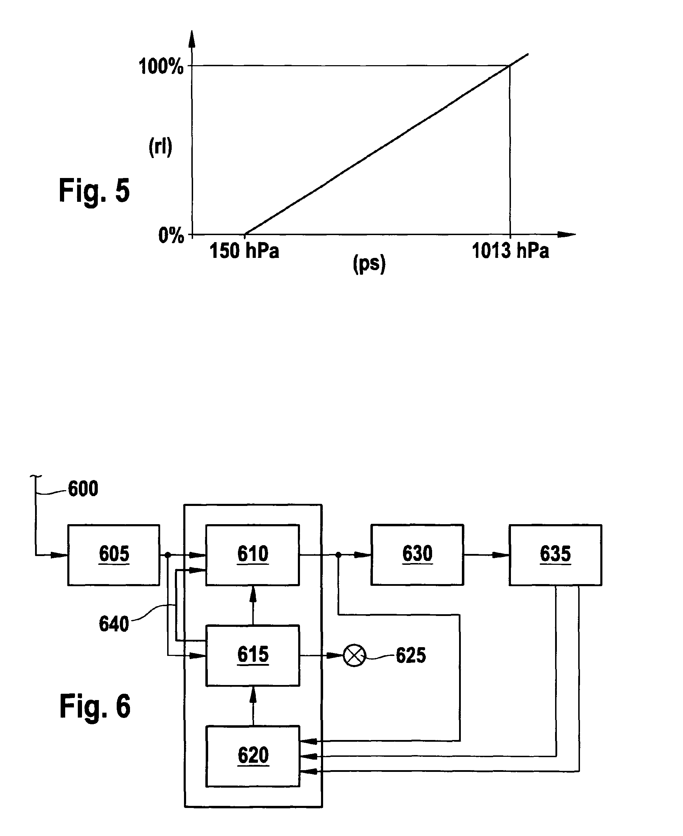

Das Pumpverhalten der Brennkraftmaschine lässt sich anhand einer in der Fig. 5 grafisch dargestellten Ladungswechselgleichung für den Fall ohne nennenswerte Ventilüberschneidung beschreiben. In der Fig. 5 ist die bei 1013 hPa und 0° C sich ergebende Frischluftfüllung rl über dem Saugrohrdruck ps aufgetragen, wobei sich in erster Näherung der gezeigte linearer Zusammenhang ergibt. Bei einem Saugrohrdruck von 1013 hPa ergibt sich eine in etwa zu erwartende Frischluftfüllung im Brennraum von 100% und bei einem Restpartialdruck von vorliegend 150 hPa eine Frischluftfüllung von zu erwartenden etwa 0%. Die Ladungswechselgleichung beschreibt demnach den Ladungszustand bzgl. Frischluft in der Brennkammer nach dem Öffnen des Einlassventils, und zwar in Abhängigkeit vom Saugrohrdruck.

Abhängig von den Steuerzeiten und den Ventilhüben verändern sich nun die Parameter der Ladungswechselgleichung. Gegenüber den Ventilsteuerzeiten und dem damit verbundenen Öffnungs- und Schließwinkel der Ventile ergibt sich eine unterschiedliche Empfindlichkeit. So gibt es Betriebspunkte, in denen sich Öffnungs- und Schließwinkelfehler oder Hubfehler stark auf den Abfluss oder Zufluss von Gasgemischen auswirken, wohingegen sich diese Fehler an anderen Betriebspunkten sehr wenig auswirken.

Gemäß dem hierin beschriebenen Verfahren wird in einer ersten Diagnosephase die Brennkraftmaschine zur Diagnose an einem solchen Betriebspunkt mit hoher Empfindlichkeit betrieben, um mit dieser Empfindlichkeit z. B. gegenüber Winkelfehlern oder Hubfehlern ein Fehlverhalten der Ventile zu diagnostizieren. In einer zweiten Diagnosephase wird beim gleichen Betriebspunkt ein Zustand gleicher Soll-Frischluftfüllung mit geringer Empfindlichkeit eingestellt, so kann man aus der Differenz zur Ist-Füllung Schlüsse über den Funktionszustand des jeweiligen Ventils ziehen.

Gegenüber den bekannten Diagnoseverfahren werden die zu diagnostizierenden Ventile demnach bei vom üblichen Betriebsverhalten abweichenden Ansteuerstrategien diagnostiziert und man schließt dann aus einem störungsfreien Funktionsverhalten in einer Stellung auf das Funktionsverhalten in der anderen Stellung.

In der Fig. 6 ist ein bevorzugtes Ausführungsbeispiel der erfindungsgemäßen Vorrichtung dargestellt. Ein mit dem Fahrerwunsch korrelierendes Eingangssignal, in dem vorliegenden Ausführungsbeispiel die aktuelle Position eines Gaspedalgebers 600 eines Kraftfahrzeugs, wird zunächst mit einem Kennfeld 605 verglichen, in dem bspw. Ventilparameter mit der jeweiligen Pedalposition korreliert sind. Die der Pedalposition entsprechenden Ventilparameter werden sowohl einem EHVS-Controller 610 als auch einem ersten Berechnungsmodul 615, in welchem der erfindungsgemäße Diagnose/Adaptions-Algorithmus implementiert ist, daten- bzw. signaltechnisch zugeführt.

Die Vorrichtung umfasst ein zweites Berechnungsmodul 620 zur Abschätzung bzw. Berechnung des Frischluftfüllstands in einem Zylinder 635 der nicht gezeigten Brennkraftmaschine, welches Daten an das erste Berechnungsmodul 615 liefert. Das erste Berechnungsmodul 615 ist zusätzlich mit einer bspw. an der Fahrzeugarmatur angeordneten Diagnoselampe 625 verbunden, um dort ggf. eine Fehlermeldung auszugeben. Der EHVS-Controller 610 ist weiter mit einer vorbeschriebenen elektrohydraulischen Ventilsteuerung (EHVS) 630 verbunden, welche ihrerseits in dem genannten Zylinder 635 angeordnete Ventile ansteuert.

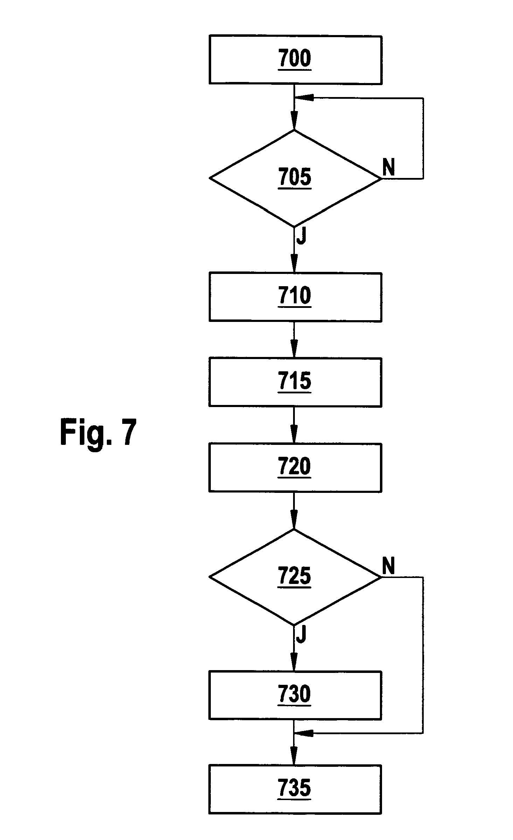

Der fett eingezeichnete Pfeil 640 stellt das Steuersignal vom nachfolgend anhand der Fig. 7 beschriebenen Adaptions- und Diagnose-Algorithmus in eine EHVS-Kontrolleinheit (EHVS-Controller) dar. Auf diese Weise lässt sich die Arbeitsweise des EHVS-Controllers relativ leicht an das erfindungsgemäße Diagnoseverfahren anpassen.

Die Fig. 7 zeigt ein bevorzugtes Ausführungsbeispiel des erfindungsgemäßen Verfahrens anhand eines Ablaufdiagramms. Nach dem Start 700 der Routine wird zunächst in Schritt 705 geprüft, ob der vom Fahrer aktuell gewünschte Betriebspunkt, d.h. der aktuelle Wert der vorbeschriebenen Frischluftfüllung rl, sich für die erfindungsgemäße Diagnose bzw. Adaption eignet. Ist dies nicht der Fall, wird wieder an den Anfang der Routine zurück gesprungen, ggf. mit einer empirisch vorgegebenen Zeitverzögerung, wonach der Schritt 705 erneut durchgeführt wird.

Liegt ein geeigneter Betriebspunkt vor, wird in Schritt 710 die Ventilsteuerung, bevorzugt die Ventilansteuerzeit des jeweils zu prüfenden Ventils so verändert, dass die Frischluftfüllung wenig empfindlich auf Gaswechselventiltoleranzen reagiert. In Schritt 715 wird dann die tatsächliche Frischluftfüllung in der jeweiligen Brennkammer bspw. mittels eines Luftmassenmessers (HFM) erfasst.

In Schritt 720 werden nun, an dem genannten Betriebspunkt, die Ventilsteuerparameter so verändert, dass die Frischluftfüllung sehr empfindlich auf Gaswechselventiltoleranzen reagiert. Dabei wird in diesem Ausführungsbeispiel der Saugrohrdruck so nachgeführt, dass die Frischluftfüllung möglichst konstant bleibt.

Es versteht sich, dass die Nachführung des Saugrohrdrucks nur bevorzugt ist und der nachfolgende Diagnoseschritt auch auf der Grundlage der veränderten Frischluftfüllung selbst erfolgen kann.

Es schließt sich nun der eigentliche Diagnoseschritt 725 an, in dem in dem vorliegenden Ausführungsbeispiel der veränderte (d.h. nachgeführte) Saugrohrdruck mit einem in einem Kennfeld abgelegten Erwartungswert verglichen wird. Ist die Differenz zwischen dem nachgeführten Saugrohrdruck und dem genannten Erwartungswert größer als ein empirisch vorgegebener Schwellenwert, dann wird im Schritt 730 für das vorliegend diagnostizierte Ventil eine "Fehlfunktion" gemeldet oder eine geeignete Adaption vorgenommen. Mit Schritt 735 endet die Routine.

Das erfindungsgemäße Verfahren beruht auf der vorher beschriebenen Erkenntnis, dass bei einem Schließwinkel im Bereich von 90° KW (Kurbelwellenwinkel) nach OT (siehe Fig. 3) des Einlassventils die Empfindlichkeit des Schließwinkels auf die Strömungsverhältnisse besonders groß ist. Schließt das Einlassventil jedoch in der Nähe des UT, dann ist die Empfindlichkeit gering. Gemäß der Erfindung wird bei einem bestimmten (empirisch vorgegebenen) Betriebs- bzw. Lastpunkt, z. B. bei rl = 40% (siehe Fig. 5), diesen Betriebspunkt sowohl mit der Schließstellung des Einlassventils "frühes Schließen bei 90° KW nach OT", und zwar bei hohem Saugdruck von bspw. ps = 850 hPa, als auch mit der Schließstellung des Einlassventils am UT, jedoch bei einem deutlich niedrigeren Saugrohrdruck von bspw. 450 hPa. Ergibt sich bei diesen beiden Ventilstellungen und Saugrohrdrücken eine Abweichung zwischen den zu erwartenden Füllungen und den über bspw. den HFM gemessenen tatsächlichen Füllungen, so ist ein Fehl-Schließwinkel des Einlassventils diagnostiziert.
Alternativ zur Diagnose der Füllungsänderung kann auch auf eine konstante Füllung durch Anpassung des Saugrohrdrucks geregelt werden.

Alternativ kann bei einer mittleren Last der Brennkraftmaschine ein Einlassventil bei vollem Hub und einem Schließwinkel nahe dem UT der Brennkraftmaschine betrieben werden und anschließend bei weit geöffneter Drosselklappe das Einlassventil vor oder nach dem UT geschlossen werden, so dass sich im Wesentlichen eine übereinstimmende Frischluftfüllung der Brennkammer ergibt. Auch ein Vergleich eines sehr frühen Schließens mit einem sehr späten Schließen des Einlassventils ist möglich. In diesem Ausführungsbeispiel wird auf einen Defekt des Ventiltriebs geschlossen, wenn der sich ergebende Saugrohrdruck vom erwarteten Saugrohrdruck abweicht.

## Patentansprüche

1. Verfahren zur Diagnose eines variablen Ventiltriebs einer Brennkraftmaschine, insbesondere eines nockenwellenfreien variablen oder vollvariablen Ventiltriebs, wobei wenigstens eine mechanische Betriebsgröße eines durch den Ventiltrieb getriebenen Ventils so verändert wird (710), dass die Brennkraftmaschine an wenigstens zwei Betriebspunkten mit verschiedener Ventil-Sollbetätigung und/oder mit verschiedener Drosselklappen-Sollbetätigung, jedoch mit gleicher Soll-Füllung wenigstens eines Brennraums der Brennkraftmaschine, betrieben wird, wobei die Diagnose des Ventiltriebs durch Auswertung der sich an den wenigstens zwei Betriebspunkten ergebenden Ist-Werte der Füllung des wenigstens einen Brennraums oder der sich an den wenigstens zwei Betriebspunkten ergebenden Ist-Werte des Saugrohrdrucks bei Regelung auf einen vorgegebenen Sollwert der Füllung des wenigstens einen Brennraums erfolgt (725),
**dadurch gekennzeichnet, dass** eine erste Ventil-Sollbetätigung eingestellt wird, bei der die Füllung des Brennraums relativ gering empfindlich auf Änderungen der Ventilsteuerzeiten und/oder Ventil-Hubfehlern reagiert, und dass eine zweite Ventil-Sollbetätigung eingestellt wird, bei der die Füllung des Brennraums relativ hoch empfindlich auf Änderungen der Ventilsteuerzeiten und/oder Ventil-Hubfehlern reagiert, wobei der Druck in einem dem Brennraum vorgelagerten Saugrohr der Brennkraftmaschine so verändert wird, dass sich die Füllung des Brennraums bei den beiden Ventil-Sollbetätigungen im Wesentlichen nicht ändert, und wobei gemessene Ist-Werte der Füllung des Brennraums mit vorher abgelegten Erwartungswerten verglichen werden und bei einer Abweichung dieser Werte auf einen Defekt des Ventiltriebs geschlossen wird.

2. Verfahren zur Diagnose eines variablen Ventiltriebs einer Brennkraftmaschine, insbesondere eines nockenwellenfreien variablen oder vollvariablen Ventiltriebs, Ventiltriebs, wobei wenigstens eine mechanische Betriebsgröße eines durch den Ventiltrieb getriebenen Ventils so verändert wird (710), dass die Brennkraftmaschine an wenigstens zwei Betriebspunkten mit verschiedener Ventil-Sollbetätigung und/oder mit verschiedener Drosselklappen-Sollbetätigung, jedoch mit gleicher Soll-Füllung wenigstens eines Brennraums der Brennkraftmaschine, betrieben wird, wobei die Diagnose des Ventiltriebs durch Auswertung der sich an den wenigstens zwei Betriebspunkten ergebenden Ist-Werte der Füllung des wenigstens einen Brennraums oder der sich an den wenigstens zwei Betriebspunkten ergebenden Ist-Werte des Saugrohrdrucks bei Regelung auf einen vorgegebenen Sollwert der Füllung des wenigstens einen Brennraums erfolgt (725),
**dadurch gekennzeichnet, dass** bei einer mittleren Last der Brennkraftmaschine ein Einlassventil bei vollem Hub und einem Schließwinkel nahe dem unteren Totpunkt der Brennkraftmaschine betrieben wird und anschließend bei weit geöffneter Drosselklappe das Einlassventil vor oder nach dem unteren Totpunkt geschlossen wird, so dass sich im Wesentlichen eine übereinstimmende Frischluftfüllung der Brennkammer ergibt, wobei auf einen Defekt des Ventiltriebs geschlossen wird, wenn der sich ergebende Saugrohrdruck vom erwarteten Saugrohrdruck abweicht.

3. Verfahren nach Anspruch 1 oder 2, **dadurch gekennzeichnet, dass** besagte mechanische Betriebsgröße den Öffnungs- und/oder Schließwinkel des Ventils und/oder den Ventilhub darstellt.

4. Verfahren nach Anspruch 1, **dadurch gekennzeichnet, dass** auf einen Defekt des Ventiltriebs geschlossen wird, wenn besagte Abweichung der Ist-Werte und der Erwartungswerte der Füllung einen vorgegeben Schwellenwert überschreitet.

5. Verfahren zur Diagnose einer Ventilsteuerung für einen Ventiltrieb gemäß den vorherigen Ansprüchen, **gekennzeichnet durch** die Schritte nach einem der vorgehenden Ansprüche.

6. Vorrichtung zur Diagnose eines variablen Ventiltriebs, insbesondere eines nockenwellenfreien variablen oder vollvariablen Ventiltriebs, **gekennzeichnet durch** ein erstes Berechnungsmodul (615), welches einen Diagnose/AdaptionsAlgorithmus zur Ausführung der Schritte gemäß einem der Ansprüche 1 bis 4 aufweist, sowie **durch** ein zweites Berechnungsmodul (620) zur Abschätzung des Füllstands in dem wenigstens einen Brennraum (635) der Brennkraftmaschine, wobei das zweite Berechnungsmodul (620) mit dem ersten Berechnungsmodul (615) verbunden ist.

7. Vorrichtung nach Anspruch 6, **gekennzeichnet durch** eine mit einem Brennraum (635) der Brennkraftmaschine verbundene elektromechanische Ventilsteuerung (630) oder elektrohydraulische Ventilsteuerung zur Ansteuerung von an dem Brennraum (635) angeordneten Ventilen.

8. Vorrichtung nach Anspruch 7, **gekennzeichnet durch** eine zwischen dem ersten Berechnungsmodul (615) und der elektromechanischen / bzw. elektrohydraulischen Ventilsteuerung (630) angeordneten Daten- oder Signalleitung.

## Claims

1. Method for the diagnosis of a variable valve drive of an internal combustion engine, in particular of a camshaft-free variable or fully variable valve drive, wherein at least one mechanical parameter of a valve driven by the valve drive is varied (710) such that the internal combustion engine is operated at at least two operating points with different valve setpoint actuation and/or with different throttle flap setpoint actuation but with an identical setpoint charge of at least one combustion chamber of the internal combustion engine, wherein the diagnosis of the valve drive takes place (725) by evaluating the actual values, arising at the at least two operating points, of the charge of the at least one combustion chamber, or the actual values, which arise at the at least two operating points, of the intake pipe pressure during regulation to a predefined setpoint value of the charge of the at least one combustion chamber,
**characterized in that** a first valve setpoint actuation is set with which the charge of the combustion chamber reacts with relatively low sensitivity to changes in the valve control times and/or valve lift errors, and **in that** a second valve setpoint actuation is set with which the charge of the combustion chamber reacts with relatively high sensitivity to changes in the valve control times and/or valve lift errors, wherein the pressure in an intake pipe, which is positioned upstream of the combustion chamber, of the internal combustion engine is varied such that the charge of the combustion chamber substantially does not change at the two valve setpoint actuations, and wherein measured actual values of the charge of the combustion chamber are compared with previously stored expected values, and it is inferred that the valve drive has a defect if there is a deviation in said values.

2. Method for the diagnosis of a variable valve drive of an internal combustion engine, in particular of a camshaft-free variable or fully variable valve drive, wherein at least one mechanical parameter of a valve driven by the valve drive is varied (710) such that the internal combustion engine is operated at at least two operating points with different valve setpoint actuation and/or with different throttle flap setpoint actuation but with an identical setpoint charge of at least one combustion chamber of the internal combustion engine, wherein the diagnosis of the valve drive takes place (725) by evaluating the actual values, arising at the at least two operating points, of the charge of the at least one combustion chamber, or the actual values, which arise at the at least two operating points, of the intake pipe pressure during regulation to a predefined setpoint value of the charge of the at least one combustion chamber,
**characterized in that**, at a mid-range load of the internal combustion engine, an inlet valve is operated with full lift and with a closing angle close to bottom dead centre of the internal combustion engine, and subsequently, with the throttle flap wide open, the inlet valve is closed before or after bottom dead centre, so as to yield substantially a corresponding fresh-air charge of the combustion chamber, wherein it is inferred that the valve drive has a defect if the resulting intake pipe pressure deviates from the expected intake pipe pressure.

3. Method according to Claim 1 or 2, **characterized in that** the said mechanical parameter is the opening and/or closing angle of the valve and/or the valve lift.

4. Method according to Claim 1, **characterized in that** it is inferred that the valve drive has a defect if the said deviation of the actual values and the expected values of the charge exceeds a predefined threshold value.

5. Method for the diagnosis of a valve controller for a valve drive according to the preceding claims, **characterized by** the steps according to one of the preceding claims.

6. Device for the diagnosis of a variable valve drive, in particular of a camshaft-free variable or fully variable valve drive, **characterized by** a first processing module (615) which has a diagnosis/adaptation algorithm for carrying out the steps according to one of Claims 1 to 4, and by a second processing module (620) for estimating the charge level in the at least one combustion chamber (635) of the internal combustion engine, wherein the second processing module (620) is connected to the first processing module (615).

7. Device according to Claim 6, **characterized by** an electromechanical valve controller (630) or electrohydraulic valve controller, connected to a combustion chamber (635) of the internal combustion engine, for actuating valves arranged at the combustion chamber (635).

8. Device according to Claim 7, **characterized by** a data or signal line arranged between the first processing module (615) and the electromechanical or electrohydraulic valve controller (630).

## Revendications

1. Procédé de diagnostic d'un entraînement de soupape variable d'un moteur à combustion interne, en particulier d'un entraînement de soupape variable sans arbre à cames ou complètement variable, dans lequel au moins une grandeur fonctionnelle mécanique d'une soupape commandée par l'entraînement de soupape est modifiée (710) de telle sorte que le moteur à combustion interne fonctionne au moins en deux points de fonctionnement avec un actionnement de consigne de soupape différent et/ou avec un actionnement de consigne de clapet d'étranglement différent, mais avec un remplissage de consigne identique d'au moins une chambre de combustion du moteur à combustion interne, le diagnostic de l'entraînement de soupape s'effectuant (725) par analyse des valeurs réelles obtenues aux au moins deux points de fonctionnement du remplissage d'au moins une chambre de combustion ou des valeurs réelles obtenues aux au moins deux points de fonctionnement de la pression du tube d'aspiration lors de la régulation à une valeur de consigne prédéterminée du remplissage de l'au moins une chambre de combustion,
**caractérisé en ce qu'**un premier actionnement de consigne de la soupape est ajusté, auquel le remplissage de la chambre de combustion réagit de manière relativement peu sensible aux variations des temps de commande de soupape et/ou aux erreurs de course de la soupape, et **en ce qu'**un deuxième actionnement de consigne de soupape est ajusté, auquel le remplissage de la chambre de combustion réagit de manière relativement fortement sensible aux variations des temps de commande de soupape et/ou aux erreurs de course de la soupape, la pression dans un tube d'aspiration du moteur à combustion interne monté en amont de la chambre de combustion étant variée de telle sorte que le remplissage de la chambre de combustion ne soit pas sensiblement modifié lors des deux actionnements de consigne de la soupape, et des valeurs réelles mesurées du remplissage de la chambre de combustion étant comparées avec des valeurs attendues saisies antérieurement, et en cas d'écart de ces valeurs, un défaut de l'entraînement de soupape étant conclu.

2. Procédé de diagnostic d'un entraînement de soupape variable d'un moteur à combustion interne, en particulier d'un entraînement de soupape variable sans arbre à cames ou complètement variable, dans lequel au moins une grandeur fonctionnelle mécanique d'une soupape commandée par l'entraînement de soupape est modifiée (710) de telle sorte que le moteur à combustion interne fonctionne au moins en deux points de fonctionnement avec un actionnement de consigne de soupape différent et/ou avec un actionnement de consigne de clapet d'étranglement différent, mais avec un remplissage de consigne identique d'au moins une chambre de combustion du moteur à combustion interne, le diagnostic de l'entraînement de soupape s'effectuant (725) par analyse des valeurs réelles obtenues aux au moins deux points de fonctionnement du remplissage d'au moins une chambre de combustion ou des valeurs réelles obtenues aux au moins deux points de fonctionnement de la pression du tube d'aspiration lors de la régulation à une valeur de consigne prédéterminée du remplissage de l'au moins une chambre de combustion,
**caractérisé en ce que** dans le cas d'une charge moyenne du moteur à combustion interne, une soupape d'admission, pour une course complète et un angle de fermeture proche du point mort bas du moteur à combustion interne, est actionnée et ensuite, pour un clapet d'étranglement ouvert largement, la soupape d'admission est fermée avant ou après le point mort bas, de sorte qu'il en résulte essentiellement un remplissage d'air frais concomitant de la chambre de combustion, et un défaut de l'entraînement de soupape est conclu si la pression du tube d'aspiration obtenue s'écarte de la pression du tube d'aspiration attendue.

3. Procédé selon la revendication 1 ou 2, **caractérisé en ce que** ladite grandeur fonctionnelle mécanique est constituée par l'angle d'ouverture et/ou de fermeture de la soupape et/ou par la course de la soupape.

4. Procédé selon la revendication 1, **caractérisé en ce que** l'on conclut à un défaut de l'entraînement de soupape lorsque ledit écart des valeurs réelles par rapport aux valeurs attendues dépasse une valeur seuil prédéfinie.

5. Procédé de diagnostic d'une commande de soupape pour un entraînement de soupape selon les revendications précédentes, **caractérisé par** les étapes selon l'une quelconque des revendications précédentes.

6. Dispositif de diagnostic d'un entraînement de soupape variable, en particulier d'un entraînement de soupape variable sans arbre à cames ou complètement variable, **caractérisé par** un premier module de calcul (615) qui présente un algorithme de diagnostic/adaptation pour mettre en oeuvre les étapes selon l'une quelconque des revendications 1 à 4, ainsi que par un deuxième module de calcul (620) pour l'évaluation de l'état de remplissage dans l'au moins une chambre de combustion (635) du moteur à combustion interne, le deuxième module de calcul (620) étant connecté au premier module de calcul (615).

7. Dispositif selon la revendication 6, **caractérisé par** une commande de soupape (630) électromécanique connectée à une chambre de combustion (635) du moteur à combustion interne, ou par une commande de soupape électrohydraulique, pour la commande de soupapes disposées au niveau de la chambre de combustion (635).

8. Dispositif selon la revendication 7, **caractérisé par** une ligne de données et/ou de signaux disposée entre le premier module de calcul (615) et la commande de soupape électromécanique ou électrohydraulique (630).
